# EUROPEAN PATENT APPLICATION

(11) **EP 4 585 630 A1**
(43) Date of publication of application: **16.07.2025**
(21) Application number: 23862906.7
(22) Date of filing: 18.08.2023
(51) Int. Cl.: C08G 18/00, C08G 18/32, C08G 101/00

(54) **FOAMED-RESIN-FORMABLE COMPOSITION, POLYUREA-BASED RESIN FOAM BODY, AND POLYUREA-BASED RESIN FOAM BODY PRODUCTION METHOD**

(30) Priority: 08.09.2022 JP 2022143136
(71) Applicant: MITSUBISHI GAS CHEMICAL COMPANY, INC., Chiyoda-ku Tokyo 100-8324 (JP)
(72) Inventor: KAWASHIMA, Yuki, Hiratsuka-shi, Kanagawa 254-0016 (JP); KOUNO, Kazuki, Hiratsuka-shi, Kanagawa 254-0016 (JP)
(74) Representative: Gille Hrabal Partnerschaftsgesellschaft mbB Patentanwälte
(86) International application number: PCT/JP2023/029901
(87) International publication number: WO 2024/053366

(57) **Abstract**

A foamed resin-forming composition for obtaining a polyurea-based resin foam, including a reaction product (A) of a cyclic polyamine compound (a1) and carbon dioxide, a polyisocyanate compound (B), and an aromatic polyamine compound (C), a polyurea-based resin foam obtained by foam molding the foamed resin-forming composition, and a method for producing a polyurea-based resin foam including a step of foam molding the foamed resin-forming composition. A polyurea-based resin foam capable of reducing environmental impacts and having improved foamability can be obtained.

## Description

### Technical Field

The present invention relates to a foamed resin forming composition, a polyurea-based resin foam, and a method for producing a polyurea resin foam.

### Background Art

Polyurea-based resins are resin compounds having a urea bond formed by a chemical reaction of a polyisocyanate and a polyamine, and are excellent in waterproof property, chemical resistance, abrasion resistance, heat resistance, anticorrosion property, fast drying property, environmental safety, and the like, and they have been widely used for various fields, such as synthetic leathers, artificial leathers, adhesives, and paints.

In addition, it has been studied to impart functions such as thermal insulation property, sound insulation property, and lightweight property to polyurea-based resins by foaming the polyurea-based resins.

Examples of techniques relating to polyurea-based resin foams include those described in Patent Literatures 1 and 2.

Patent Literature 1 describes that a polyurea foam having an isocyanurate structure and having an isocyanurate ratio of 25 to 50% has excellent flame retardance and shape retention property during combustion, can suppress deterioration over time in a wet heat environment, is excellent in adhesion property to an adherend during coating, is hardly cracked even by flame contact, and hardly allows carbonization by the flame contact to proceed from the surface to a deep portion.

Patent Literature 2 describes that a composition comprising: an isocyanate component; an isocyanate reactive component; a catalyst selected from a foaming catalyst and/or a gelation catalyst and comprising N-(3-dimethylaminopropyl)-N,N-diisopropanolamine; and a specific amine component, and having a total amount of the amine components of 0.05% by weight to 0.50% by weight can produce a polyurea foam having been reduced in release of formaldehyde.

### Citation List

### Patent Literature

PTL1: JP 6925554 B
PTL2: JP 2019-206712 A

### Summary of Invention

### Technical Problem

Conventionally, to obtain a foam, a blowing agent is necessary, and to obtain higher foamability, large amount of the blowing agent need to be used and discarded. In contrast, a polyamine used as a starting material of a polyurea-based resin can absorb carbon dioxide, so that it is useful as a material that absorbs carbon dioxide to be discarded.

The present invention provides a foamed resin-forming composition from which a polyurea-based resin foam capable of reducing environmental impacts and having improved foamability can be obtained, a polyurea-based resin foam having improved foamability, and a method for producing the same.

### Solution to Problem

The present inventors have conducted intensive studies to solve the above problem. As a result, the present inventors have found that by using a reaction product of a cyclic amine compound and carbon dioxide and an aromatic amine as starting materials for obtaining a polyurea-based resin foam, the amount of use of a conventional environmentally harmful blowing agent can be reduced, and the environmental impacts during production of a polyurea-based resin foam can be reduced, and moreover, the present inventors have found that foamability of the resulting polyurea-based resin foam can be improved. Thus, the present inventors have completed the present invention. Furthermore, the reaction product contributes to reduction of environmental impacts also because it can be produced while absorbing carbon dioxide from the environment.

Accordingly, the present invention provides the following foamed resin-forming composition, polyurea-based resin foam, and method for producing a polyurea-based resin foam.

[1] A foamed resin-forming composition for obtaining a polyurea-based resin foam, comprising a reaction product (A) of a cyclic polyamine compound (a1) and carbon dioxide, a polyisocyanate compound (B), and an aromatic polyamine compound (C).
[2] The foamed resin-forming composition according to [1] above, wherein a molar ratio ((A)/(C)) of the reaction product (A) of a cyclic polyamine compound (a1) and carbon dioxide to the aromatic polyamine compound (C) in the foamed resin-forming composition is 3/7 to 8/2.
[3] The foamed resin-forming composition according to [1] or [2] above, wherein an amine value of the aromatic polyamine compound (C) is 50 to 600 mg KOH/g.
[4] The foamed resin-forming composition according to any one of [1] to [3] above, being a foamed resin-forming composition for obtaining a polyurea-based resin foam comprising a polyurea having a repeating unit represented by the following general formula (I): 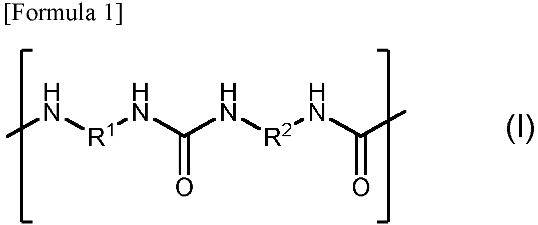 wherein R¹ is a divalent hydrocarbon group having a cyclic structure and optionally having a substituent and a divalent organic group having an aromatic ring structure and optionally having a substituent, R² is a divalent hydrocarbon group optionally having a substituent, and in the divalent organic group having an aromatic ring structure, an aromatic ring is bonded to a nitrogen atom.
[5] The foamed resin-forming composition according to any one of [1] to [4] above, wherein the polyisocyanate compound (B) comprises a compound having two or more isocyanate groups.
[6] The foamed resin-forming composition according to any one of [1] to [5] above, wherein the cyclic polyamine compound (a1) has an amino group bonded to a primary carbon atom.
[7] The foamed resin-forming composition according to any one of [1] to [6] above, wherein the cyclic structure of the cyclic polyamine compound (a1) comprises at least one selected from the group consisting of a five-membered ring and a six-membered ring.
[8] The foamed resin-forming composition according to any one of [1] to [7] above, wherein the cyclic polyamine compound (a1) has 2 or more and 6 or less amino groups.
[9] The foamed resin-forming composition according to any one of [1] to [8] above, wherein the cyclic polyamine compound (a1) comprises at least one selected from the group consisting of xylylenediamine and derivatives thereof, bis(aminomethyl)cyclohexane and derivatives thereof, limonenediamine and derivatives thereof, and isophoronediamine and derivatives thereof.
[10] The foamed resin-forming composition according to any one of [1] to [9] above, wherein the content of a blowing agent other than the reaction product (A) of a cyclic polyamine compound (a1) and carbon dioxide is 5% by mass or less.
[11] The foamed resin-forming composition according to any one of [1] to [10] above, wherein a ratio (number of amino groups / number of isocyanate groups) of the total number of amino groups in the reaction product (A) of a cyclic polyamine compound (a1) and carbon dioxide and the aromatic polyamine compound (C) to the number of isocyanate groups in the polyisocyanate compound (B) in the foamed resin-forming composition is 0.5 or more and 1.5 or less.
[12] The foamed resin-forming composition according to any one of [1] to [11] above, wherein the aromatic polyamine compound (C) is a compound represented by the following formula (III): 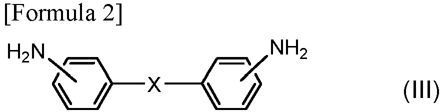 wherein X is at least one selected from the group consisting of an alkylene group optionally having a substituent, a polyoxyalkylene group optionally having a substituent, an ether bond, an ester bond, an amide bond, and a single bond, or a divalent organic group that is an organic group of a combination thereof.
[13] The foamed resin-forming composition according to any one of [1] to [12] above, wherein the aromatic polyamine compound (C) is a compound represented by the following formula (IIIa): 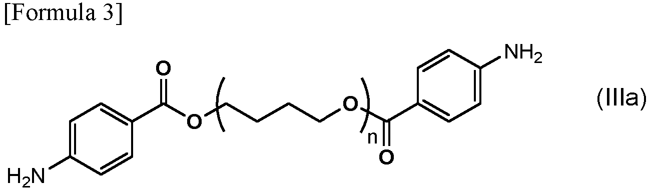 wherein n is preferably 1 to 20.
[14] A polyurea-based resin foam obtained by foam molding the foamed resin-forming composition according to any one of [1] to [13] above.
[15] The polyurea-based resin foam according to [14] above, comprising a polyurea having a repeating unit represented by the following general formula (I): 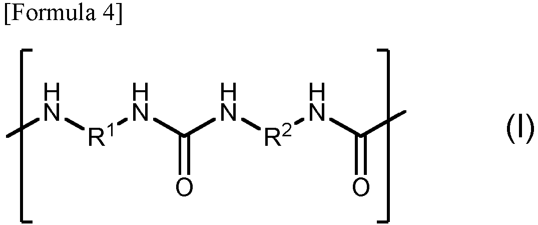 wherein R¹ is a divalent hydrocarbon group having a cyclic structure and optionally having a substituent and a divalent organic group having an aromatic ring structure and optionally having a substituent, R² is a divalent hydrocarbon group optionally having a substituent, and in the divalent organic group having an aromatic ring structure, an aromatic ring is bonded to a nitrogen atom.
[16] The polyurea-based resin foam according to [14] or [15] above, wherein an amine value of the aromatic polyamine compound (C) is 50 to 600 mg KOH/g.
[17] A method for producing a polyurea-based resin foam, comprising a step of foam molding the foamed resin-forming composition according to any one of [1] to [13] above.
[18] The method for producing a polyurea-based resin foam according to [17] above, comprising a step of contacting the cyclic polyamine compound (a1) with a gas containing carbon dioxide to obtain a reaction product (A) and a step of mixing the resulting reaction product (A) with a polyisocyanate compound (B) and an aromatic polyamine compound (C) to obtain a foamed resin-forming composition.
[19] The method for producing a polyurea-based resin foam according to [17] or [18] above, wherein an amine value of the aromatic polyamine compound (C) is 50 to 600 mg KOH/g.

### Advantageous Effect of Invention

The present invention provides a foamed resin-forming composition from which a polyurea-based resin foam capable of reducing environmental impacts and having improved foamability can be obtained, a polyurea-based resin foam having improved foamability, and a method for producing the same.

### Description of Embodiments

Embodiments of the present invention (hereinafter simply referred to as "the present embodiment") will be described in detail. The following present embodiments illustrate the present invention and do not limit the present invention. The present invention may be practiced with modification within the gist of the present invention. In the present embodiments, preferred descriptions may be optionally employed and combination of preferred descriptions are more preferred. In the present embodiments, the term "XX to YY" means "XX or more and YY or less."

### [Foamed resin-forming composition]

The foamed resin-forming composition of the present invention is a foamed resin-forming composition for obtaining a polyurea-based resin foam, comprising a reaction product (A) of a cyclic polyamine compound (a1) and carbon dioxide, a polyisocyanate compound (B), and an aromatic polyamine compound (C).

Since the foamed resin-forming composition of the present invention has the above-mentioned constitution, a polyurea-based resin foam capable of reducing environmental impacts and having improved foamability can be obtained.

The "foamed resin-forming composition" refers to a composition for obtaining a foamed resin or a foam composed of a foamed resin, and is a composition that becomes a starting material of a foamed resin or a foam composed of a foamed resin.

The foamed resin-forming composition of the present invention is a foamed resin-forming composition for obtaining a polyurea-based resin foam, but is preferably a foamed resin-forming composition for obtaining a polyurea-based resin foam comprising a polyurea having a repeating unit represented by the following general formula (I): 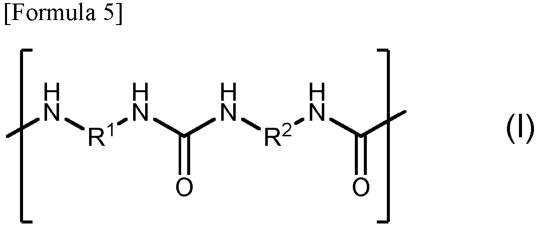 wherein R¹ is a divalent hydrocarbon group having a cyclic structure and optionally having a substituent and a divalent organic group having an aromatic ring structure and optionally having a substituent, R² is a divalent hydrocarbon group optionally having a substituent, and in the divalent organic group having an aromatic ring structure, an aromatic ring is bonded to a nitrogen atom.

R¹ includes both of a divalent hydrocarbon group having a cyclic structure optionally having a substituent and a divalent organic group having an aromatic ring structure optionally having a substituent. The above-mentioned divalent hydrocarbon group is derived from the cyclic polyamine compound (a1), and a preferred structure thereof is also the same as that of the cyclic polyamine compound (a1). The above-mentioned divalent organic group is derived from the aromatic polyamine compound (C), and a preferred structure thereof is also the same as that of the aromatic polyamine compound (C).

The polyurea includes, as R¹, both the divalent hydrocarbon group having a cyclic structure optionally having a substituent and the divalent organic group having an aromatic ring structure optionally having a substituent. R¹ is a divalent hydrocarbon group derived from the cyclic polyamine compound (a1) and a divalent organic group derived from the cyclic polyamine compound (C). **In** other words, the divalent hydrocarbon group having a cyclic structure optionally having a substituent is a divalent hydrocarbon group derived from the cyclic polyamine compound (a1), and the divalent organic group having an aromatic ring structure optionally having a substituent is a divalent organic group derived from the aromatic polyamine compound (C).

R² is a divalent hydrocarbon group optionally having a substituent. R² is derived from the polyisocyanate compound (B), and a preferred structure thereof is also the same as that of the polyisocyanate compound (B).

R² is a divalent hydrocarbon group derived from the polyisocyanate compound (B). The divalent hydrocarbon optionally having a substituent is a divalent hydrocarbon group derived from the polyisocyanate compound (B).

According to the present invention, a polyurea-based resin foam having improved foamability can be obtained. The reason is not clear, but is assumed to be as follows.

By heating a resin during molding of the resin, a cyclic polyamine compound (a1) and carbon dioxide are generated from the reaction product (A) of a cyclic polyamine compound (a1) and carbon dioxide. The cyclic polyamine compound (a1) has relatively high ability to retain carbon dioxide and has low water absorption property. Therefore, it is assumed that a sufficient amount of carbon dioxide can contribute to foaming, so that a polyurea-based resin foam having improved foamability is obtained. Moreover, it is assumed that the aromatic polyamine compound (C) in which an amino group is directly bonded to an aromatic ring initiates a reaction simultaneously with initiation of foaming of the foamed resin-forming composition, so that the foamability is further improved. In addition, since the cyclic polyamine compound (a1) has high ability to retain carbon dioxide, it can absorb carbon dioxide from the environment, and use of other blowing agents is also reduced, so that environmental impacts can be also reduced.

### <Reaction product (A) of cyclic polyamine compound (a1) and carbon dioxide>

The reaction product (A) of a cyclic polyamine compound (a1) and carbon dioxide to be contained in the foamed resin-forming composition of the present invention acts as a blowing agent in the foamed resin-forming composition.

In other words, by using the reaction product (A) of a cyclic polyamine compound (a1) and carbon dioxide as a blowing agent for molding a polyurea-based resin foam, a polyurea-based resin foam capable of reducing environmental impacts and having improved foamability can be obtained.

It is preferable that the cyclic polyamine compound (a1) has an amino group bonded to a primary carbon atom from the viewpoint of the improvement of the reactivity with carbon dioxide and foamability. Such an amino group is less likely to cause steric hindrance, and thus carbon dioxide is easily absorbed.

The cyclic polyamine compound (a1) is a polyamine compound having a cyclic structure. Examples of cyclic structures in the cyclic polyamine compound (a1) include an alicyclic hydrocarbon structure, an aromatic hydrocarbon structure, and a heterocyclic structure with a heteroatom in the ring. It is preferable that the cyclic amine compound (a1) has at least one structure selected from an alicyclic hydrocarbon structure and an aromatic hydrocarbon structure, and it is more preferable that the cyclic amine compound (a1) has an aromatic hydrocarbon structure from the viewpoint of the improvement of the reactivity with carbon dioxide and foamability.

In this regard, the alicyclic hydrocarbon structure in the present embodiment refers to a non-aromatic, saturated or unsaturated cyclic structure consisting of carbon and hydrogen, excluding a heterocyclic structure having a heteroatom in the ring. The heterocyclic structure means a cyclic structure containing a heteroatom in atoms that constitute the ring.

When the cyclic polyamine compound (a1) may be any one of a cis-body, a trans-body and a mixture of a cis-body and a trans-body.

The cyclic structure of the cyclic polyamine compound (a1) preferably include at least one selected from the group consisting of a five-membered ring and a six-membered ring, and more preferably a six-membered ring from the viewpoint of the improvement of the reactivity with carbon dioxide and foamability.

It is preferable that the cyclic polyamine compound (a1) has a cyclic structure from the viewpoint of the improvement of the reactivity with carbon dioxide and foamability. More specifically, it is preferable that the cyclic polyamine compound (a1) is a monocyclic compound.

Examples of alicyclic hydrocarbon structures in the cyclic polyamine compound (a1) include a cyclopropane ring, a cyclobutane ring, a cyclopentane ring, a cyclohexane ring, a cycloheptane ring and a cyclooctane ring. Of the above ring structures, a cyclopentane ring and a cyclohexane ring are preferred, and a cyclohexane ring is more preferred, and a 1,3-substituted cyclohexane ring is more preferred.

The number of amino groups in the cyclic polyamine compound (a1) is preferably 2 or more, and is preferably 6 or less, more preferably 4 or less, even more preferably 3 or less, and even more preferably 2, from the viewpoint of the improvement of the reactivity with carbon dioxide, curability, and foamability.

An amino group having a nitrogen-hydrogen bond is preferred as the amino group, and at least one amino group selected from the group consisting of a primary amino group and a secondary amino group is more preferred, and a primary amino group is further preferred from the viewpoint of the improvement of the reactivity with carbon dioxide, curability and foamability.

The cyclic polyamine compound (a1) is preferably at least one selected from o-xylylenediamine and derivatives thereof, m-xylylenediamine and derivatives thereof, p-xylylenediamine and derivatives thereof, and a compound represented by the following formula (II): 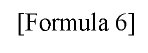 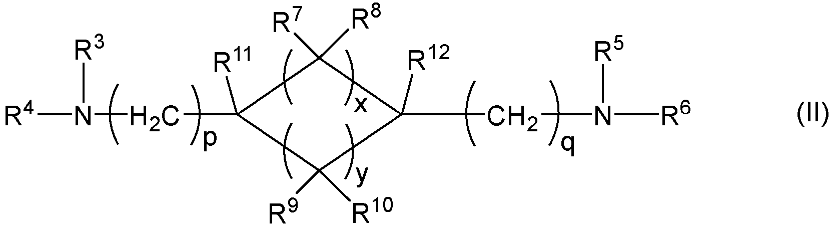 In the above formula (I), R³ to R⁶ each independently represent a hydrogen atom, or a hydrocarbon group having 1 or more and 10 or less carbon atoms and optionally having at least one substituent selected from an amino group, a cyano group, a phenyl group, a hydroxy group, and a carboxyl group; R⁷ to R¹² each independently represent a hydrogen atom or a hydrocarbon group having 1 or more and 4 or less carbon atoms; x and y each independently represent an integer of 0 or more and 6 or less, and x + y is 1 or more and 6 or less; and p and q are each independently an integer of 0 or more and 4 or less, and at least one of p and q is 1 or more.

R³ to R⁶ are each independently a hydrogen atom, or a hydrocarbon group having 1 or more and 10 or less carbon atoms and optionally having at least one substituent selected from an amino group, a cyano group, a phenyl group, a hydroxy group, and a carboxyl group; preferably a hydrogen atom, or a hydrocarbon group having 1 or more and 10 or less carbon atoms and optionally having at least one substituent selected from an amino group, a cyano group, and a phenyl group; more preferably a hydrogen atom, or an alkyl group having 1 or more and 4 or less carbon atoms and optionally having at least one substituent selected from an amino group, a cyano group, and a phenyl group; even more preferably a hydrogen atom, or an alkyl group having 1 or more and 4 or less carbon atoms and optionally having at least one substituent selected from an amino group and a cyano group; still more preferably a hydrogen atom, or an alkyl group having 2 or more and 4 or less carbon atoms and optionally having at least one substituent selected from an amino group and a cyano group; and still more preferably a hydrogen atom.

The number of carbon atoms in the hydrocarbon group of R³ to R⁶ is each independently 1 or more, preferably 2 or more. It is 10 or less, preferably 5 or less, more preferably 4 or less, and even more preferably 3 or less.

R⁷ to R¹² are each independently a hydrogen atom or a hydrocarbon group having 1 or more and 4 or less carbon atoms, preferably a hydrogen atom or an alkyl group having 1 or more and 4 or less carbon atoms, more preferably a hydrogen atom or an alkyl group having 1 or more and 3 or less carbon atoms, and even more preferably a hydrogen atom or a methyl group, and still more preferably a hydrogen atom.

The number of carbon atoms in the hydrocarbon group of R⁷ to R¹² is each independently 1 or more and 4 or less, preferably 1 or 2, and more preferably 1.
p and q are each independently 0 or more, and preferably 1 or more, and 4 or less, preferably 2 or less and more preferably 1. At least one of p and q is 1 or more.
x and y each independently represents an integer of 0 or more and 6 or less, respectively, and x + y is 1 or more and 6 or less. x + y is preferably 2 or more, more preferably 3 or more, and even more preferably 4 or more to increase the amount of carbon dioxide absorbed and to improve foamability. x + y is preferably 5 or less and more preferably 4 to increase the amount of carbon dioxide absorbed and to improve foamability. In other words, the alicyclic hydrocarbon structure is preferably a five-membered ring or a six-membered ring, and more preferably a six-membered ring. When x + y is 4, it is preferable that x is 1 and y is 3.

From the viewpoint of the improvement of the reactivity with carbon dioxide, curability, and foamability, the cyclic polyamine compound (a1) preferably comprises at least one selected from the group consisting of xylylenediamine and derivatives thereof, bis(aminomethyl)cyclohexane and derivatives thereof, limonenediamine and derivatives thereof, isophoronediamine and derivatives thereof, 2,5-bisaminomethylfuran and derivatives thereof, and 2,5-bis(aminomethyl)tetrahydrofuran and derivatives thereof; more preferably comprises at least one selected from the group consisting of xylylenediamine and derivatives thereof, bis(aminomethyl)cyclohexane and derivatives thereof, limonenediamine and derivatives thereof, and isophoronediamine and derivatives thereof; is even more preferably at least one selected from the group consisting of xylylenediamine and derivatives thereof, bis(aminomethyl)cyclohexane and derivatives thereof, and isophoronediamine and derivatives thereof; still more preferably comprises at least one selected from the group consisting of xylylenediamine and derivatives thereof, and bis(aminomethyl)cyclohexane and derivatives thereof; and still more preferably comprises xylylenediamine and derivatives thereof.

As the cyclic polyamine compound (a1), at least one selected from the group consisting of xylylenediamine and derivatives thereof, bis(aminomethyl)cyclohexane and derivatives thereof, limonenediamine and derivatives thereof, isophoronediamine and derivatives thereof, 2,5-bisaminomethylfuran and derivatives thereof, and 2,5-bis(aminomethyl)tetrahydrofuran and derivatives thereof is preferred from the viewpoint of the improvement of the reactivity with carbon dioxide, curability, and foamability. At least one selected from the group consisting of xylylenediamine and derivatives thereof, bis(aminomethyl)cyclohexane and derivatives thereof, limonenediamine and derivatives thereof, and isophoronediamine and derivatives thereof is more preferred. At least one selected from the group consisting of xylylenediamine and derivatives thereof, bis(aminomethyl)cyclohexane and derivatives thereof, and isophoronediamine and derivatives thereof is even more preferred. At least one selected from the group consisting of xylylenediamine and derivatives thereof, and bis(aminomethyl)cyclohexane and derivatives thereof is still more preferred, and xylylenediamine and derivatives thereof are still more preferred.

As the xylylenediamine and derivatives thereof, at least one selected from the group consisting of o-xylylenediamine and derivatives thereof, m-xylylenediamine and derivatives thereof, and p-xylylenediamine and derivatives thereof can be mentioned; at least one selected from the group consisting of m-xylylenediamine and derivatives thereof and p-xylylenediamine and derivatives thereof is preferred; and m-xylylenediamine and derivatives thereof are more preferred.

As the bis(aminomethyl)cyclohexane and derivatives thereof, at least one selected from the group consisting of 1,3-bis(aminomethyl)cyclohexane and derivatives thereof, 1,4-bis(aminomethyl)cyclohexane and derivatives thereof, and trans-1,4-bis(aminomethyl)cyclohexane and derivatives thereof can be mentioned; and 1,3-bis(aminomethyl)cyclohexane and derivatives thereof are preferred.

Of these, as the cyclic polyamine compound (a1), at least one selected from the group consisting of m-xylylenediamine and derivatives thereof, and 1,3-bis(aminomethyl)cyclohexane and derivatives thereof is preferred; and m-xylylenediamine and derivatives thereof are even more preferred, from the viewpoint of the improvement of the reactivity with carbon dioxide and foamability.

In this regard, examples of derivatives of the above amines include a compound in which at least one of the hydrogen atoms in the amino group is substituted by a hydrocarbon group having 1 or more and 10 or less carbon atoms and optionally having at least one substituent selected from the group consisting of an amino group, a cyano group and a phenyl group, preferably alkyl group having 1 or more and 4 or less carbon atoms and optionally having at least one substituent selected from the group consisting of an amino group, cyano group and a phenyl group, more preferably an alkyl group having 1 or more and 4 or less carbon atoms and optionally having at least one substituent selected from the group consisting of an amino group and a cyano group, even more preferably an alkyl group having 2 or more and 4 or less carbon atoms and optionally having at least one substituent selected from the group consisting of an amino group and a cyano group.

Examples of derivatives of the above amines also include a compound in which at least some of the hydrogen atoms in the cyclic structure are substituted by a hydrocarbon group having 1 or more and 4 or less carbon atoms, preferably an alkyl group having 1 or more and 3 or less carbon atoms, more preferably a methyl group or an ethyl group, and even more preferably a methyl group.

As described above, the cyclic polyamine compound (a1) is preferably an amine (primary amine). In other words, the cyclic polyamine compound (a1) is preferably at least one selected from the group consisting of xylylenediamine and bis(aminomethyl)cyclohexane, from the viewpoint of the improvement of the reactivity with carbon dioxide and foamability.

The xylylenediamine is at least one selected from the group consisting of o-xylylenediamine, m-xylylenediamine, and p-xylylenediamine, preferably at least one selected from the group consisting of m-xylylenediamine and p-xylylenediamine, and even more preferably m-xylylenediamine.

The bis(aminomethyl)cyclohexane is at least one selected from the group consisting of 1,3-bis(aminomethyl)cyclohexane, 1,4-bis(aminomethyl)cyclohexane, and trans-1,4-bis(aminomethyl)cyclohexane, and preferably 1,3-bis(aminomethyl)cyclohexane.

Of these, the cyclic polyamine compound (a1) is preferably at least one selected from the group consisting of m-xylylenediamine and 1,3-bis(aminomethyl)cyclohexane, and even more preferably m-xylylenediamine, from the viewpoint of the improvement of the reactivity with carbon dioxide and foamability.

These cyclic polyamine compounds (a1) may be used alone or in combination of 2 or more.

The cyclic polyamine compound (a1) has a maximum carbon dioxide release temperature measured by the following method of preferably 200°C or less, more preferably 180°C or less, even more preferably 160°C or less, still more preferably 150°C or less, yet more preferably 140°C or less, yet more preferably 135°C or less, and yet even more preferably 130°C or less to improve carbon dioxide release performance and foamability. The lower limit of the above maximum carbon dioxide release temperature is not particularly limited, and for example 40°C or more.

### (Method)

The cyclic polyamine compound (a1) with carbon dioxide absorbed is heated at a heating rate of 10°C/ minute from 23°C to 250°C, and the temperature at which the amount of heat absorbed due to desorption of carbon dioxide reaches the maximum is measured, and the temperature is defined as the maximum carbon dioxide release temperature. In this regard the cyclic polyamine compound (a1) with carbon dioxide absorbed may be prepared by leaving 5 mmol of the cyclic polyamine compound (a1) to stand in air at 23°C and 50%RH for 24 hours.

The cyclic polyamine compound (a1) has an acid dissociation constant (pKa) of preferably 8.0 or more, more preferably 8.5 or more, and even more preferably 9.0 or more to increase the amount of carbon dioxide absorbed and improve foamability. The amine compound (a1) has an acid dissociation constant (pKa) of preferably 12.0 or less, more preferably 11.5 or less, and even more preferably 11.0 or less to improve the carbon dioxide release performance and improve foamability.

The acid dissociation constant of the cyclic polyamine compound (a1) is measured by the following measurement method based on acid-base titration.
(1) 0.2 g of the cyclic polyamine compound (a1) is dissolved in 30 mL of purified water.
(2) The acid dissociation constant (pKa) is calculated by titrating the solution prepared in (1) above with 0.1 N perchloric acid - acetic acid solution using an automatic potentiometric titrator (e.g., AT-610 made by Kyoto Electronics Manufacturing Co., Ltd.).

The temperature in the measurement is 25 ± 2°C.

The cyclic polyamine compound (a1) has a molecular weight of preferably 110 or more, more preferably 120 or more, and even more preferably 130 or more in order to suppress weight reduction in the heat treatment for releasing carbon dioxide. The molecular weight is preferably 250 or less, more preferably 200 or less, and even more preferably 180 or less to increase the amount of carbon dioxide absorbed and improve foamability.

The maximum endothermic temperature of the cyclic polyamine compound (a1) calculated by the following method is preferably 130°C or more, more preferably 140°C or more, and even more preferably 150°C or more in order to suppress weight reduction in the heat treatment for releasing carbon dioxide. The maximum endothermic temperature is preferably 260°C or less, more preferably 230°C or less, even more preferably 210°C or less, and still more preferably 190°C or less to increase the amount of carbon dioxide absorbed and improve foamability.

### (Method)

The cyclic polyamine compound (a1) is heated at a heating rate of 10°C/ minute from 23°C to 350°C and the temperature at which the amount of heat absorbed due to evaporation of the cyclic polyamine compound (a1) reaches the maximum is measured, and the temperature is defined as the maximum endothermic temperature of the amine compound (a1).

The cyclic polyamine compound (a1) has an amine value of preferably 400 mg KOH/ g or more, more preferably 500 mg KOH/ g or more, even more preferably 600 mg KOH/g or more, still more preferably 650 mg KOH/g or more, and yet more preferably 700 mg KOH/g or more to increase the amount of carbon dioxide absorbed and improve foamability. The amine value is preferably 1,500 mg KOH/g or less, more preferably 1,400 mg KOH/g or less, even more preferably 1,300 mg KOH/g or less, still more preferably 1,100 mg KOH/g or less, even more preferably 1,000 mg KOH/g or less, and yet more preferably 850 mg KOH/g or less. The amine value refers to the amount of amine in a compound, which is the value of milligrams of potassium hydroxide (KOH) equivalent to the amount of acid necessary for neutralizing 1 g of the compound.

The amine value may be measured by the following method according to JIS K7237-1995.
(1) 0.1 g of the cyclic polyamine compound (a1) is dissolved in 20 mL of acetic acid.
(2) The amine value is calculated by titrating the solution prepared in (1) above with 0.1 N perchloric acid - acetic acid solution using an automatic potentiometric titrator (e.g., AT-610 made by Kyoto Electronics Manufacturing Co., Ltd.).

The percentage increase of the mass of the cyclic polyamine compound (a1) calculated by the following equation after leaving the cyclic polyamine compound (a1) to stand in an air environment of 23°C and 50% RH for a week is preferably 10% by mass or more, more preferably 15% by mass or more, even more preferably 18% by mass or more, still more preferably 20% by mass or more and yet more preferably 23% by mass or more to improve foamability. It is preferably 50% by mass or less, more preferably 45% by mass or less, even more preferably 40% by mass or less, still more preferably 30% by mass or less and yet more preferably 28% by mass or less.

Percentage increase of mass of cyclic polyamine compound (a1) [% by mass] = 100 × amount of increase of mass of cyclic polyamine compound (a1) (g) / (mass of cyclic polyamine compound (a1) (g) + amount of increase of mass of cyclic polyamine compound (a1) (g)).

The percentage increase of the mass of the cyclic polyamine compound (a1) may be specifically measured by the method described in Examples.

The reaction product (A) of the cyclic polyamine compound (a1) and carbon dioxide may be obtained by, for example, contacting the cyclic polyamine compound (a1) with a gas containing carbon dioxide to react the cyclic polyamine compound (a1) with carbon dioxide. In other words, in a preferred method for producing the reaction product (A) of the cyclic polyamine compound (a1) and carbon dioxide, the cyclic polyamine compound (a1) is contacted with a gas containing carbon dioxide to react the cyclic polyamine compound (a1) with carbon dioxide.

The gas containing carbon dioxide may be carbon dioxide alone, or may be a mixture of carbon dioxide and an inert gas. Use of air as the gas containing carbon dioxide is convenient and preferred. In this regard, the "inert gas" refers to a gas having no influence on the reaction for obtaining a polyurea-based resin foam described later. Examples of the inert gas include nitrogen and oxygen.

The method preferably further includes a step of obtaining a reaction product (A) by contacting the cyclic polyamine compound (a1) with a gas containing carbon dioxide and having a carbon dioxide concentration of 0.01% by volume or more and 10% by volume or less to react the cyclic amine compound (a1) with carbon dioxide.

The carbon dioxide concentration is preferably 0.01% by volume or more, more preferably 0.02% by volume or more, even more preferably 0.03% by volume or more, and is preferably 10% by volume or less, more preferably 5% by volume or less, even more preferably 1% by volume or less, still more preferably 0.5% by volume or less, and still more preferably 0.1% by volume or less. The gas having a carbon dioxide concentration of 0.01% by volume or more and 10% by volume or less is even more preferably air.

The method of contacting the cyclic polyamine compound (a1) with a gas containing carbon dioxide is not limited, but it is preferable to keep the cyclic polyamine compound (a1) in the gas containing carbon dioxide at 30°C or lower while stirring or shaking until the desired range of the percentage increase of mass is reached. The pressure when the cyclic polyamine compound (a1) is contacted with a gas containing carbon dioxide is not limited, but the cyclic amine compound is preferably kept at atmospheric pressure or under pressure, and is more preferably kept at atmospheric pressure.

The time for the contact with a gas containing carbon dioxide may be adjusted depending on the above-mentioned temperature, pressure, and amount of carbon dioxide contained in the gas, but when air is used as the gas containing carbon dioxide and keeping is performed at atmospheric pressure, the time for the contact with the gas containing carbon dioxide is preferably 1 hour or more, more preferably 1 day or more, even more preferably 5 days or more, still more preferably 10 days or more, still more preferably 15 days or more, and still more preferably 30 days or more. The upper limit is not limited, but the time is preferably 100 days or less.

The reaction product (A) of the cyclic polyamine compound (a1) and carbon dioxide preferably includes at least one selected from the group consisting of carbamic acid, carbamate, carbonate, and hydrogen carbonate.

The reaction product (A) of the cyclic polyamine compound (a1) and carbon dioxide forms a salt as described above, and a molar ratio [cyclic polyamine compound (a1) / carbon dioxide] of a portion derived from the cyclic polyamine compound (a1) to a portion derived from carbon dioxide contained in the reaction product (A) is preferably 70/30 to 30/70, more preferably 60/40 to 40/60, and even more preferably 55/45 to 45/55.

The water content in the reaction product (A) is preferably 50% by mass or less, more preferably 15% by mass or less, even more preferably 10% by mass or less, and still more preferably 5% by mass or less. The water content in the above range can improve foamability.

The reaction product (A) of the cyclic polyamine compound (a1) and carbon dioxide may be obtained by contacting the cyclic polyamine compound (a1) with a gas containing carbon dioxide, as described above, and in this stage, it is preferable not to add water.

### <Polyisocyanate compound (B)>

The polyisocyanate compound (B) is not particularly limited as long as it includes a compound having 2 or more isocyanate groups, and conventionally known ones can be used. The polyisocyanate compound (A) is preferably a compound having 2 or more isocyanate groups.

Examples of diisocyanate compounds having 2 isocyanate groups include aliphatic isocyanate compounds, such as 1,6-hexamethylene diisocyanate (HDI), 2,2,4-trimethylhexamethylene diisocyanate, methylene diisocyanate, isopropylene diisocyanate, lysine diisocyanate, lysine diisocyanate methyl ester, and 1,5-octylene diisocyanate; alicyclic isocyanate compounds, such as 4,4'-dicyclohexylmethane diisocyanate, isophorone diisocyanate (IPDI), norbornene diisocyanate, hydrogenated tolylene diisocyanate, methylcyclohexane diisocyanate, isopropylidene bis(4-cyclohexylisocyanate), and dimer acid diisocyanate; and aromatic isocyanate compounds, such as 2,4- or 2,6-tolylene diisocyanate (TDI), 4,4'-diphenylmethane diisocyanate (MDI), 1,5-naphthylene diisocyanate, p- or m-xylylene diisocyanate (XDI), tolidine diisocyanate, p-phenylene diisocyanate, diphenyl ether diisocyanate, diphenylsulfone diisocyanate, dianisidine diisocyanate, and tetramethyl-m-xylylene diisocyanate.

Examples of isocyanate compounds having 3 or more isocyanate groups include triphenylmethane triisocyanate, triisocyanatophenyl thiophosphate, polymethylene polyphenylene polyisocyanate (polymeric MDI), an isocyanurate modified compound that is a trimer of HDI or TDI, and a biuret modified compound.

The isocyanate compound (B) may be used alone or in combination of 2 or more.

Of these, as the polyisocyanate compound (B), diisocyanate having 2 isocyanate groups is preferred; more preferably at least one selected from the group consisting of isophorone diisocyanate (IPDI), 1,6-hexamethylene diisocyanate (HDI), and 4,4'-diphenylmethane diisocyanate (MDI); even more preferably at least one selected from the group consisting of isophorone diisocyanate (IPDI) and 1,6-hexamethylene diisocyanate (HDI); and still more preferably isophorone diisocyanate (IPDI).

### <Aromatic polyamine compound (C)>

The foamed resin-forming composition of the present invention comprises an aromatic polyamine compound (C).

The "aromatic polyamine compound (C)" in the foamed resin-forming composition of the present invention refers to a polyamine in which an amino group is directly bonded to an aromatic ring.

Probably because the aromatic polyamine compound (C) initiates a reaction simultaneously with initiation of foaming of the foamed resin-forming composition, the resulting foamed polyurea-based resin is increased in molecular weight and has further improved foamability.

The aromatic polyamine compound (C) has a plurality of amino groups in one molecule, and when the aromatic polyamine compound (C) has only one aromatic ring in one molecule, it has a plurality of amino groups in one aromatic ring, when the aromatic polyamine compound (C) has a plurality of aromatic rings in one molecule, it has one or a plurality of amino groups in one aromatic ring, and it is preferable that the aromatic polyamine compound (C) has a plurality of aromatic rings in one molecule, and has one amino group in one aromatic ring.

The aromatic ring of the aromatic polyamine compound (C) is preferably at least one selected from the group consisting of a five-membered ring and a six-membered ring, and more preferably a six-membered ring.

The number of amino groups in the aromatic polyamine compound (C) is preferably 2 or more, and is preferably 6 or less, more preferably 4 or less, even more preferably 3 or less, and even more preferably 2.

The amino group is preferably an amino group having a nitrogen-hydrogen bond, more preferably at least one amino group selected from the group consisting of a primary amino group and a secondary amino group, and even more preferably a primary amino group.

The aromatic polyamine compound (C) is preferably a compound represented by the following formula (III). 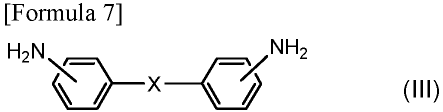 wherein X is a divalent organic group.

X may be a divalent organic group, but may be at least one selected from the group consisting of an alkylene group optionally having a substituent, a polyoxyalkylene group optionally having a substituent, an ether bond, an ester bond, an amide bond, and a single bond, or an organic group of a combination thereof.

The aromatic polyamine compound (C) is more preferably a compound represented by the following formula (IIIa). The compound represented by the formula (IIIa) is polytetramethylene oxide-di-p-aminobenzoate. 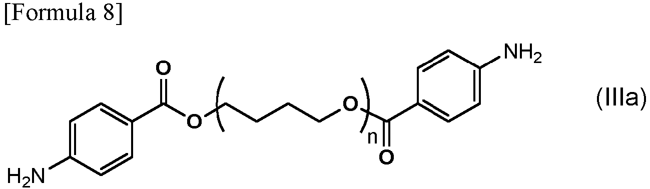 wherein n is preferably 1 to 20.

From the viewpoint of the improvement of the foamability, n is preferably 1 to 20, more preferably 2 to 15, even more preferably 2 to 10, and still more preferably 2 to 6.

Examples of commercially available products of the compound represented by the formula (IIIa) include "ELASMER-1000P" (molecular weight: 1238, amine value: 84.8 mg KOH/g), "ELASMER-650P" (molecular weight: 888, amine value: 126 mg KOH/g), and "ELASMER-250P" (molecular weight: 488, amine value: 220 mg KOH/g) made by KUMIAI CHEMICAL INDUSTRY CO., LTD.; and "ETHACURE 100 plus" (molecular weight: 178, amine value: 89 mg KOH/g), "ETHACURE 300" (molecular weight: 214, amine value: 107 mg KOH/g), and "ETHACURE 420" (molecular weight: 310, amine value: 155 mg KOH/g) made by MITSUI FINE CHEMICALS, INC.

The aromatic polyamine compound (C) may be used singly or in combination of two or more.

The molecular weight of the aromatic polyamine compound (C) is preferably 300 to 5000, more preferably 300 to 2000, even more preferably 300 to 1500, still more preferably 300 to 1000, still more preferably 300 to 700, and still more preferably 400 to 600. Since the molecular weight of the aromatic polyamine compound (C) is in the above range, foamability can be improved, and moreover, flexibility can be imparted to the resulting polyurea-based resin foam.

The amine value of the aromatic polyamine compound (C) is preferably 50 to 1000 mg KOH/g, more preferably 50 to 600 mg KOH/g, even more preferably 50 to 400 mg KOH/g, still more preferably 50 to 300 mg KOH/g, still more preferably 70 to 300 mg KOH/g, still more preferably 80 to 300 mg KOH/g, and still more preferably 100 to 300 mg KOH/g. The amine value refers to the amount of amine in a compound, which is the number of milligrams of potassium hydroxide (KOH) equivalent to the amount of acid necessary for neutralizing 1 g of the compound. Since the amine value of the aromatic polyamine compound (C) is in the above range, foamability can be improved, and moreover, flexibility can be imparted to the resulting polyurea-based resin foam.

The amine value may be measured by the following method according to JIS K7237-1995.
(1) 0.1 g of the aromatic polyamine compound (C) is dissolved in 20 mL of acetic acid.
(2) The amine value is calculated by titrating the solution prepared in (1) above with 0.1 N perchloric acid - acetic acid solution using an automatic potentiometric titrator (e.g., AT-610 made by Kyoto Electronics Manufacturing Co., Ltd.).

### <Composition of foamed resin-forming composition>

The foamed resin-forming composition comprises the reaction product (A) of the cyclic polyamine compound (a1) and carbon dioxide, the polyisocyanate compound (B), and the aromatic polyamine compound (C) as previously described, but preferably has the following composition.

The molar ratio ((A)/(C)) of the reaction product (A) of the cyclic polyamine compound (a1) and carbon dioxide to the aromatic polyamine compound (C) in the foamed resin-forming composition is preferably 3/7 to 9/1, more preferably 3/7 to 8/2, even more preferably 4/6 to 8/2, still more preferably 5/5 to 8/2, still more preferably 5/5 to 7/3, and still more preferably 6/4 to 7/3. Since the molar ratio of the reaction product (A) of the cyclic polyamine compound (a1) and carbon dioxide to the aromatic polyamine compound (C) is in the above range, foamability can be improved, and moreover, flexibility can be imparted to the resulting polyurea-based resin foam.

The ratio (number of amino groups / number of isocyanate groups) of the total number of amino groups in the reaction product (A) of the cyclic polyamine compound (a1) and carbon dioxide and the aromatic polyamine compound (C) to the number of isocyanate groups in the polyisocyanate compound (B) in the foamed resin-forming composition is preferably 0.5 or more and 1.5 or less. From the viewpoint of the improvement of foamability, the ratio (number of amino groups / number of isocyanate groups) of the number of amino groups in the blowing agent (A) to the number of isocyanate groups in the polyisocyanate compound (B) is preferably 0.5 or more, more preferably 0.6 or more, even more preferably 0.7 or more, still more preferably 0.8 or more, and still more preferably 0.9 or more. From the same viewpoint, it is preferably 1.5 or less, more preferably 1.4 or less, even more preferably 1.3 or less, still more preferably 1.2 or less, and still more preferably 1.1 or less.

In the foamed resin-forming composition of the present invention, a blowing agent other than the reaction product (A) of the cyclic polyamine compound (a1) and carbon dioxide may be contained, but it is preferable that the blowing agent should not be substantially contained. The content of the blowing agent other than the blowing agent (A) in the foamed resin-forming composition is preferably 5% by mass or less, more preferably 3% by mass or less, even more preferably 1% by mass or less, still more preferably 0.5% by mass or less, still more preferably 0.1% by mass or less, still more preferably 0% by mass, and it is still more preferable that the blowing agent other than the blowing agent (A) should not be contained.

Examples of blowing agents other than the blowing agent (A) include fluorocarbon-based halogen-containing hydrocarbons such as chlorofluorocarbon and fluorocarbon; alicyclic hydrocarbons such as cyclopentane; organic blowing agents such as dinitropentamethylenetetramine, azodicarbonamide, p,p'-oxybisbenzenesulfonylhydrazide; and inorganic blowing agents such as sodium hydrogen carbonate.

The foamed resin-forming composition may also include other components such as a modifying component including a filler and a plasticizer, a flow modifying component such as a thixotropic agent, a pigment, a leveling agent, a tackifier, elastomer fine particles, a curing accelerator, an antifoaming agent and a chemical blowing agent, depending on applications.

The foamed resin-forming composition may contain a solvent, but it is preferable that the foamed resin composition should not substantially contain a solvent. Containing no solvent can achieve high environmental friendliness, and can conveniently provide a foam.

However, from the viewpoint of effectively achieving the effects of the present invention, the total content of the reaction product (A) of the cyclic polyamine compound (a1) and carbon dioxide, the polyisocyanate compound (B), and the aromatic polyamine compound (C) in the foamed resin-forming composition when the total solid content in the foamed resin-forming composition of the present invention is 100% by mass is preferably 50% by mass or more, more preferably 60% by mass or more, even more preferably 70% by mass or more, even more preferably 80% by mass or more, even more preferably 90% by mass or more, even more preferably 95% by mass or more, even more preferably 98% by mass or more, and even more preferably 99% by mass or more, and from the same viewpoint, it is preferably 100% by mass or less.

### <Method for preparing foamed resin-forming composition>

The method for preparing the foamed resin-forming composition is not particularly limited. The foamed resin-forming composition may be produced by mixing the reaction product (A) of the cyclic polyamine compound (a1) and carbon dioxide, the polyisocyanate compound (B), the aromatic polyamine compound (C), and if necessary, other components by a known method using a known apparatus.

### [Polyurea-based resin foam and method for producing polyurea-based resin foam]

The polyurea-based resin foam of the present invention is obtained by foam molding the foamed resin-forming composition of the present invention described above. Therefore, the polyurea-based resin foam of the present invention contains a polyurea having a repeating unit represented by the following general formula (I). The polyurea having a repeating unit represented by the following general formula (I), which is contained in the polyurea-based resin foam of the present invention, is the same as that described in the section [Foamed resin-forming composition]. 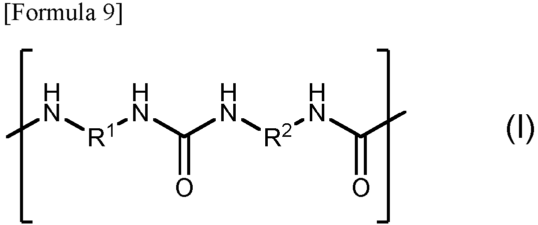 wherein R¹ is a divalent hydrocarbon group having a cyclic structure and optionally having a substituent and a divalent organic group having an aromatic ring structure and optionally having a substituent, R² is a divalent hydrocarbon group optionally having a substituent, and in the divalent organic group having an aromatic ring structure, an aromatic ring is bonded to a nitrogen atom.

R¹ includes both of a divalent hydrocarbon group having a cyclic structure optionally having a substituent and a divalent organic group having an aromatic ring structure optionally having a substituent. The above-mentioned divalent hydrocarbon group is derived from the cyclic polyamine compound (a1), and a preferred structure thereof is also the same as that of the cyclic polyamine compound (a1). The divalent organic group is derived from the aromatic polyamine compound (C), and a preferred structure thereof is also the same as that of the aromatic polyamine compound (C).

R² is a divalent hydrocarbon group optionally having a substituent. R² is derived from the polyisocyanate compound (B), and a preferred structure thereof is also the same as that of the polyisocyanate compound (B).

The method is not limited as long as the polyurea-based resin foam of the present invention is obtained by foam molding the foamed resin-forming composition, but a preferred method for producing a polyurea-based resin foam includes a step of foam molding the foamed resin-forming composition.

In the step of foaming the foamed resin-forming composition, for example, a cyclic polyamine compound (a1) and carbon dioxide are generated from the reaction product (A) by heating the foamed resin-forming composition, and carbon dioxide causes the foamed resin-forming composition to foam, and the foamed resin-forming composition is cured by the reaction between the resulting cyclic polyamine compound (a1), the aromatic polyamine compound (C), and the polyisocyanate compound (B). Such a method provides a polyurea-based resin foam.

The temperature and the time of hating in the step of foaming the foamed resin-forming composition may be optionally selected, and the temperature is preferably 50 to 250°C, more preferably 100 to 200°C, and even more preferably 120 to 180°C, from the viewpoint of the reaction speed, productivity, and prevention of decomposition of raw material. The reaction time is preferably 10 minutes to 12 hours, and more preferably 15 minutes to 4 hours.

The pressure in the step of foaming the foamed resin-forming composition may be optionally selected, but foaming is preferably conducted at atmospheric pressure.

The molecular weight of the aromatic polyamine compound (C) to be used in the method for producing a polyurea-based resin foam is preferably 300 to 5000, more preferably 300 to 2000, even more preferably 300 to 1500, still more preferably 300 to 1000, still more preferably 300 to 700, and still more preferably 400 to 600. Since the molecular weight of the aromatic polyamine compound (C) is in the above range, foamability can be improved, and moreover, flexibility can be imparted to the resulting polyurea-based resin foam.

The amine value of the aromatic polyamine compound (C) to be used in the method for producing a polyurea-based resin foam is preferably 50 to 1000 mg KOH/g, more preferably 50 to 600 mg KOH/g, even more preferably 50 to 400 mg KOH/g, still more preferably 50 to 300 mg KOH/g, still more preferably 70 to 300 mg KOH/g, still more preferably 80 to 300 mg KOH/g, and still more preferably 100 to 300 mg KOH/g. The amine value refers to the amount of amine in a compound, which is the number of milligrams of potassium hydroxide (KOH) equivalent to the amount of acid necessary for neutralizing 1 g of the compound. Since the amine value of the aromatic polyamine compound (C) is in the above range, foamability can be improved, and moreover, flexibility can be imparted to the resulting polyurea-based resin foam.

The amine value may be measured by the following method according to JIS K7237-1995.
(1) 0.1 g of the aromatic polyamine compound (C) is dissolved in 20 mL of acetic acid.
(2) The amine value is calculated by titrating the solution prepared in (1) above with 0.1 N perchloric acid - acetic acid solution using an automatic potentiometric titrator (e.g., AT-610 made by Kyoto Electronics Manufacturing Co., Ltd.).

It is preferable that the method for producing a polyurea-based resin foam of the present invention further includes a step of obtaining a reaction product (A) by contacting the cyclic polyamine compound (a1) with a gas containing carbon dioxide to react the cyclic polyamine compound (a1) with carbon dioxide, before the step of foaming the foamed resin-forming composition. In other words, the method for producing a polyurea-based resin foam of the present invention preferably comprises a step of contacting the cyclic polyamine compound (a1) with a gas containing carbon dioxide to obtain a reaction product (A) and a step of mixing the resulting reaction product (A) with the polyisocyanate compound (B) and the aromatic polyamine compound (C) to obtain a foamed resin-forming composition.

The gas containing carbon dioxide may be a simple substance of carbon dioxide, or may be a mixture of carbon dioxide and an inert gas. Use of air as the gas containing carbon dioxide is convenient and preferred. In this regard, the "inert gas" refers to a gas having no influence on the reaction for obtaining a polyurea-based resin foam described later. Examples of the inert gas include nitrogen and oxygen.

The above method preferably further includes a step of obtaining a reaction product (A) by contacting the cyclic polyamine compound (a1) with a gas containing carbon dioxide and having a carbon dioxide concentration of 0.01% by volume or more and 10% by volume or less to react the cyclic polyamine compound (a1) with carbon dioxide.

The carbon dioxide concentration is preferably 0.01% by volume or more, more preferably 0.02% by volume or more, even more preferably 0.03% by volume or more, and is preferably 10% by volume or less, more preferably 5% by volume or less, even more preferably 1% by volume or less, still more preferably 0.5% by volume or less, and still more preferably 0.1% by volume or less. The gas having a carbon dioxide concentration of 0.01% by volume or more and 10% by volume or less is even more preferably air.

The method of contacting the cyclic polyamine compound (a1) with a gas containing carbon dioxide is not limited, but it is preferable to keep the cyclic polyamine compound (a1) in a gas containing carbon dioxide at 30°C or lower while stirring or shaking until the desired range of the percentage increase of mass is reached. The pressure when the cyclic polyamine compound (a1) is contacted with a gas containing carbon dioxide is not limited, but the amine compound is preferably kept at atmospheric pressure or under pressure, and is more preferably kept at atmospheric pressure.

The reaction product (A) of the cyclic polyamine compound (a1) and carbon dioxide preferably includes at least one selected from the group consisting of carbamic acid, carbamate, carbonate, and hydrogen carbonate.

### Examples

Hereinafter the present invention will be described with reference to Examples, but the present invention is not limited to Examples. In the present Examples, the respective properties were measured by the following methods.

### (Acid dissociation constant (pKa) of cyclic polyamine compound)

The acid dissociation constant of the amine compound was measured by the following measurement method.
(1) 0.2 g of the cyclic polyamine compound was dissolved in 30 mL of purified water.
(2) The acid dissociation constant (pKa) was calculated by titrating the solution prepared in (1) above with 0.1 N perchloric acid - acetic acid solution using an automatic potentiometric titrator (AT-610 made by Kyoto Electronics Manufacturing Co., Ltd.).

The temperature in the measurement was 25 ± 2°C.

### (Amine values of cyclic polyamine compound and aromatic polyamine compound)

The amine value was measured by the following measurement method according to JIS K7237-1995.
(1) 0.1 g of the cyclic polyamine compound or the aromatic polyamine compound was dissolved in 20 mL of acetic acid.
(2) The amine value was calculated by titrating the solution prepared in (1) above with 0.1 N perchloric acid - acetic acid solution using an automatic potentiometric titrator (AT-610 made by Kyoto Electronics Manufacturing Co., Ltd.)

### (Maximum endothermic temperature of cyclic polyamine compound)

The maximum endothermic temperature of the cyclic polyamine compound was measured by subjecting the cyclic polyamine compound to DTA as described below. First, differential scanning calorimetry of the cyclic polyamine compound was performed under conditions of a temperature range of 23 to 350°C, a heating rate of 10°C/minute and a nitrogen atmosphere using a differential thermogravimeter (product name DTG-60 made by Shimadzu Corporation). The temperature at which the amount of heat absorbed due to the evaporation of the cyclic polyamine compound was the maximum was calculated from the DTA curve obtained, and the temperature was determined as the maximum endothermic temperature of the cyclic polyamine compound.

### (Maximum carbon dioxide (CO₂) release temperature of cyclic polyamine compound)

A carbon dioxide detector and a Petri dish were placed in an openable desiccator (inner dimension: 370 mm × 260 mm × 272 mm). Subsequently, the cyclic polyamine compound (5 mmol) was added to the Petri dish in the desiccator and the door was immediately closed to leave the cyclic polyamine compound to stand in the desiccator in an air environment at 23°C and 50% RH for 24 hours. The initial concentration of carbon dioxide was adjusted to about 400 ppm.

Then the cyclic polyamine compound was taken out of the desiccator to give a cyclic polyamine compound with carbon dioxide absorbed. The maximum carbon dioxide release temperature of the cyclic polyamine compound with carbon dioxide absorbed was measured by subjecting the cyclic polyamine compound to DSC as described below. First, differential scanning calorimetry of the cyclic polyamine compound was performed under conditions of a temperature range of 23 to 250°C, a heating rate of 10°C/minute and a nitrogen atmosphere using a differential thermogravimeter (product name DTG-60 made by Shimadzu Corporation). The temperature at which the amount of heat absorbed due to the desorption of carbon dioxide was the maximum was calculated from the DSC curve obtained, and the temperature was determined as the maximum carbon dioxide release temperature of the cyclic polyamine compound.

### (Water content in reaction product (A) of cyclic polyamine compound (a1) and carbon dioxide and composition of blowing agent)

The water content in the reaction product (A) produced in each of production examples and the composition of the reaction product were measured using an organic elemental microanalyzer (Micro Corder JM10 made by J-Science Lab Co., Ltd.).

### (Evaluation of foamability)

The foamability of the foamed resin-forming composition was evaluated based on the volume increase ratio (times, foaming ratio) of the polyurea-based resin foam. The volume increase ratio is a value obtained by dividing the thickness of the foam after foaming by the thickness thereof before foaming when foaming is performed in a rectangular parallelepiped container whose bottom face shape (area of the base) is fixed. A higher volume increase ratio suggests excellent foamability.

The following cyclic polyamine compound (a1), polyisocyanate compound (B), and aromatic polyamine compound (C) were used in Examples.

### (Cyclic polyamine compound (a1))

MXDA: metaxylylenediamine (acid dissociation constant (pKa): 9.5, amine value: 824 mg KOH/g, maximum endothermic temperature: 183.5°C, maximum carbon dioxide (CO₂) release temperature: 135.5°C, made by Mitsubishi Gas Chemical Company, Inc.) (Polyisocyanate compound (B))
IPDI: isophorone diisocyanate (made by Tokyo Chemical Industry Co., Ltd.)
HDI: 1,6-hexamethylene diisocyanate (made by Tokyo Chemical Industry Co., Ltd.) (Aromatic polyamine compound (C))
250P: ELASMER-250P (polytetramethylene oxide-di-p-aminobenzoate, molecular weight (catalogue value): 488, amine value: 220 mg KOH/g, made by KUMIAI CHEMICAL INDUSTRY CO., LTD.)
1000P: ELASMER-1000P (polytetramethylene oxide-di-p-aminobenzoate, molecular weight (catalogue value): 1238, amine value: 84.8 mg KOH/g, made by KUMIAI CHEMICAL INDUSTRY CO., LTD.)

### Example 1

### (1) Production of reaction product (A) of cyclic polyamine compound (a1) and carbon dioxide (Absorption of carbon dioxide into amine compound)

A cyclic polyamine compound, MXDA, was put in a container and left to stand in an air environment at 23°C and 50% RH for a week. By doing so, MXDA and carbon dioxide in the air were reacted to give a reaction product of MXDA and carbon dioxide (carbonate of MXDA). At that stage, to suppress uneven reaction, the container in which the cyclic polyamine compound was placed was shaken as necessary so as not to leave unreacted MXDA. The water content in the resulting reaction product (carbonate of MXDA) was 0% by mass.

Next, the amount of increase of the mass of MXDA was measured, and the percentage increase of the mass of the cyclic polyamine compound was calculated by the following equation. The percentage increase of the mass was 24.1% by mass.

Percentage increase of mass of cyclic polyamine compound [% by mass] = 100 × amount of increase of mass of cyclic polyamine compound (g) / (initial mass of cyclic polyamine compound (g) + amount of increase of mass of cyclic polyamine compound (g))

### (2) Production of foamed resin-forming composition

To the reaction product (A) of MXDA and carbon dioxide (carbonate of MXDA), IPDI being the polyisocyanate compound (B) and 250P being the aromatic polyamine compound (C) were added, and they were mixed with stirring for 1 minute to give a foamed resin-forming composition. The amounts of the reaction product of MXDA and carbon dioxide and 250P were determined so that the molar ratio ((A)/(C)) of the reaction product of MXDA and carbon dioxide to 250P was 6/4, and the amount of IPDI was determined so that the molar ratio of the total number of amino groups in MXDA and 250P / the number of isocyanate groups in IPDI was 1/1.

### (3) Production of polyurea-based resin foam

The foamed resin-forming composition obtained in (2) was put in a rectangular parallelepiped mold having a bottom face of 12 cm × 12 cm so that the foamed resin composition in the mold had a thickness of about 3 mm, and heated under conditions of a heating temperature of 150°C and a heating time of 30 minutes using a hot air dryer to cure and foam the foamed resin-forming composition. A polyurea-based resin foam was thus obtained. Visual observation confirmed that a foam structure was formed in the resulting polyurea-based resin foam. Furthermore, the resulting polyurea-based resin foam was evaluated for the foamability. The results obtained are shown in Table 1.

### Examples 2 to 4 and Comparative Examples 1 to 2

The respective polyurea-based resin foams were obtained in the same manner as in Example 1 except for changing the amounts of the reaction product of MXDA and carbon dioxide obtained in the same manner as in Example 1 (1) and 250P to ratios shown in Table 1. In Comparative Example 1, 250P was not used, and in Comparative Example 2, the reaction product of MXDA and carbon dioxide was not used.

The resulting polyurea-based resin foams were evaluated for the foamability. The results obtained are shown in Table 1.

### [Table 1]

**Table 1**

| | Reaction product (A) of cyclic polyamine compound and carbon dioxide | | | | Polyisocyanate compound (B) | Aromatic polyamine compound (C) | (A)/(C) molar ratio | Foamability evaluation |
|---|---|---|---|---|---|---|---|---|
| | Cyclic polyamine compound | Percentage increase of mass [% by mass] | Composition ratio (amine/CO2) | Water content [% by mass] | | | | Foaming ratio (times) |
| Comparative Example 1 | MXDA | 24.1 | 1/1 | 0 | IPDI | - | 10/0 | 4.0 |
| Example 2 | MXDA | 24.1 | 1/1 | 0 | IPDI | 250P | 8/2 | 4.4 |
| Example 3 | MXDA | 24.1 | 1/1 | 0 | IPDI | 250P | 7/3 | 6.8 |
| Example 1 | MXDA | 24.1 | 1/1 | 0 | IPDI | 250P | 6/4 | 6.2 |
| Example 4 | MXDA | 24.1 | 1/1 | 0 | IPDI | 250P | 5/5 | 5.2 |
| Comparative Example 2 | - | - | - | - | IPDI | 250P | 0/10 | 1.0 |

### Example 5

A polyurea-based resin foam was obtained in the same manner as in Example 1 except for changing IPDI being the polyisocyanate compound (B) to HDI.

The resulting polyurea-based resin foam was evaluated for the foamability. The result obtained is shown in Table 2.

### Examples 6 to 9 and Comparative Examples 3 to 4

The respective polyurea-based resin foams were obtained in the same manner as in Example 5 except for changing the amounts of the reaction product of MXDA and carbon dioxide obtained in the same manner as in Example 1 (1) and 250P to ratios shown in Table 2. In Comparative Example 3, 250P was not used, and in Comparative Example 4, the reaction product of MXDA and carbon dioxide was not used.

The resulting polyurea-based resin foams were evaluated for the foamability. The results obtained are shown in Table 2.

### [Table 2]

**Table 2**

| | Reaction product (A) of cyclic polyamine compound and carbon dioxide | | | | Polyisocyanate compound (B) | Aromatic polyamine compound (C) | (A)/(C) molar ratio | Foamability evaluation |
|---|---|---|---|---|---|---|---|---|
| | Cyclic polyamine compound | Percentage increase of mass [% by mass] | Composition ratio (amine/CO2) | Water content [% by mass] | | | | Foaming ratio (times) |
| Comparative Example 3 | MXDA | 24.1 | 1/1 | 0 | HDI | - | 10/0 | 3.8 |
| Example 6 | MXDA | 24.1 | 1/1 | 0 | HDI | 250P | 9/1 | 3.9 |
| Example 7 | MXDA | 24.1 | 1/1 | 0 | HDI | 250P | 8/2 | 3.9 |
| Example 8 | MXDA | 24.1 | 1/1 | 0 | HDI | 250P | 7/3 | 4.2 |
| Example 5 | MXDA | 24.1 | 1/1 | 0 | HDI | 250P | 6/4 | 5.8 |
| Example 9 | MXDA | 24.1 | 1/1 | 0 | HDI | 250P | 5/5 | 4.0 |
| Comparative Example 4 | - | - | - | - | HDI | 250P | 0/10 | 1.0 |

### Example 10

A polyurea-based resin foam was obtained in the same manner as in Example 1 except for changing 250P being the aromatic polyamine compound (C) to 1000P.

The resulting polyurea-based resin foam was evaluated for the foamability. The result obtained is shown in Table 3.

### Examples 11 to 14 and Comparative Examples 5 to 6

The respective polyurea-based resin foams were obtained in the same manner as in Example 10 except for changing the amounts of the reaction product of MXDA and carbon dioxide obtained in the same manner as in Example 1 (1) and 1000P to ratios shown in Table 3. In Comparative Example 5, 1000P was not used, and in Comparative Example 6, the reaction product of MXDA and carbon dioxide was not used.

The resulting polyurea-based resin foams were evaluated for the foamability. The results obtained are shown in Table 3.

### [Table 3]

**Table 3**

| | Reaction product (A) of cyclic polyamine compound and carbon dioxide | | | | Polyisocyanate compound (B) | Aromatic polyamine compound (C) | (A)/(C) molar ratio | Foamability evaluation |
|---|---|---|---|---|---|---|---|---|
| | Cyclic polyamine compound | Percentage increase of mass [% by mass] | Composition ratio (amine/CO2) | Water content [% by mass] | | | | Foaming ratio (times) |
| Comparative Example 5 | MXDA | 24.1 | 1/1 | 0 | IPDI | - | 10/0 | 4.0 |
| Example 11 | MXDA | 24.1 | 1/1 | 0 | IPDI | 1000P | 7/3 | 4.1 |
| Example 10 | MXDA | 24.1 | 1/1 | 0 | IPDI | 1000P | 6/4 | 7.9 |
| Example 12 | MXDA | 24.1 | 1/1 | 0 | IPDI | 1000P | 5/5 | 6.0 |
| Example 13 | MXDA | 24.1 | 1/1 | 0 | IPDI | 1000P | 4/6 | 6.1 |
| Example 14 | MXDA | 24.1 | 1/1 | 0 | IPDI | 1000P | 3/7 | 4.6 |
| Comparative Example 6 | - | - | - | - | IPDI | 1000P | 0/10 | 1.0 |

### Example 15

A polyurea-based resin foam was obtained in the same manner as in Example 10 except for changing IPDI being the polyisocyanate compound (B) to HDI.

The resulting polyurea-based resin foam was evaluated for the foamability. The result obtained is shown in Table 4.

### Examples 16 to 18 and Comparative Examples 7 to 8

The respective polyurea-based resin foams were obtained in the same manner as in Example 15 except for changing the amounts of the reaction product of MXDA and carbon dioxide obtained in the same manner as in Example 1 (1) and 1000P to ratios shown in Table 4. In Comparative Example 7, 1000P was not used, and in Comparative Example 8, the reaction product of MXDA and carbon dioxide was not used.

The resulting polyurea-based resin foams were evaluated for the foamability. The results obtained are shown in Table 4.

### [Table 4]

**Table 4**

| | Reaction product (A) of cyclic polyamine compound and carbon dioxide | | | | Polyisocyanate compound (B) | Aromatic polyamine compound (C) | (A)/(C) molar ratio | Foamability evaluation |
|---|---|---|---|---|---|---|---|---|
| | Cyclic polyamine compound | Percentage increase of mass [% by mass] | Composition ratio (amine/CO2) | Water content [% by mass] | | | | Foaming ratio (times) |
| Comparative Example 7 | MXDA | 24.1 | 1/1 | 0 | HDI | - | 10/0 | 3.8 |
| Example 15 | MXDA | 24.1 | 1/1 | 0 | HDI | 1000P | 6/4 | 3.9 |
| Example 16 | MXDA | 24.1 | 1/1 | 0 | HDI | 1000P | 5/5 | 4.0 |
| Example 17 | MXDA | 24.1 | 1/1 | 0 | HDI | 1000P | 4/6 | 5.1 |
| Example 18 | MXDA | 24.1 | 1/1 | 0 | HDI | 1000P | 3/7 | 5.1 |
| Comparative Example 8 | - | - | - | - | HDI | 1000P | 0/10 | 1.0 |

Tables 1 to 4 show that a polyurea-based resin foam having improved foamability can be produced by using the foamed resin-forming compositions of Examples without using a conventional environmentally harmful blowing agent. Furthermore, the foamed resin-forming compositions of Examples contribute to reduction of environmental impacts also because they can be produced while absorbing carbon dioxide from the environment.

## Claims

1. A foamed resin-forming composition for obtaining a polyurea-based resin foam, comprising:
a reaction product (A) of a cyclic polyamine compound (a1) and carbon dioxide, a polyisocyanate compound (B), and an aromatic polyamine compound (C).

2. The foamed resin-forming composition according to claim 1, wherein a molar ratio ((A)/(C)) of the reaction product (A) of a cyclic polyamine compound (a1) and carbon dioxide to the aromatic polyamine compound (C) in the foamed resin-forming composition is 3/7 to 8/2.

3. The foamed resin-forming composition according to claim 1 or 2, wherein an amine value of the aromatic polyamine compound (C) is 50 to 600 mg KOH/g.

4. The foamed resin-forming composition according to any one of claims 1 to 3, being a foamed resin-forming composition for obtaining a polyurea-based resin foam comprising a polyurea having a repeating unit represented by the following general formula (I): 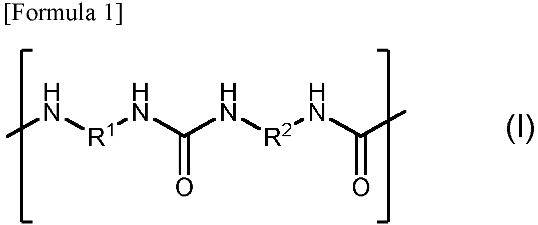 wherein R¹ is a divalent hydrocarbon group having a cyclic structure and optionally having a substituent, and a divalent organic group having an aromatic ring structure and optionally having a substituent, R² is a divalent hydrocarbon group optionally having a substituent, and in the divalent organic group having an aromatic ring structure, an aromatic ring is bonded to a nitrogen atom.

5. The foamed resin-forming composition according to any one of claims 1 to 4, wherein the polyisocyanate compound (B) comprises a compound having two or more isocyanate groups.

6. The foamed resin-forming composition according to any one of claims 1 to 5, wherein the cyclic polyamine compound (a1) has an amino group bonded to a primary carbon atom.

7. The foamed resin-forming composition according to any one of claims 1 to 6, wherein the cyclic structure of the cyclic polyamine compound (a1) comprises at least one selected from the group consisting of a five-membered ring and a six-membered ring.

8. The foamed resin-forming composition according to any one of claims 1 to 7, wherein the cyclic polyamine compound (a1) has 2 or more and 6 or less amino groups.

9. The foamed resin-forming composition according to any one of claims 1 to 8, wherein the cyclic polyamine compound (a1) comprises at least one selected from the group consisting of xylylenediamine and derivatives thereof, bis(aminomethyl)cyclohexane and derivatives thereof, limonenediamine and derivatives thereof, and isophoronediamine and derivatives thereof.

10. The foamed resin-forming composition according to any one of claims 1 to 9, wherein the content of a blowing agent other than the reaction product (A) of a cyclic polyamine compound (a1) and carbon dioxide is 5% by mass or less.

11. The foamed resin-forming composition according to any one of claims 1 to 10, wherein a ratio (number of amino groups / number of isocyanate groups) of the total number of amino groups in the reaction product (A) of a cyclic polyamine compound (a1) and carbon dioxide and the aromatic polyamine compound (C) to the number of isocyanate groups in the polyisocyanate compound (B) in the foamed resin-forming composition is 0.5 or more and 1.5 or less.

12. The foamed resin-forming composition according to any one of claims 1 to 11, wherein the aromatic polyamine compound (C) is a compound represented by the following formula (III): 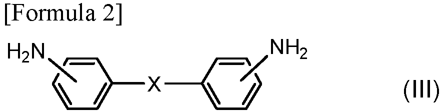 wherein X is at least one selected from the group consisting of an alkylene group optionally having a substituent, a polyoxyalkylene group optionally having a substituent, an ether bond, an ester bond, an amide bond, and a single bond, or a divalent organic group that is an organic group of a combination thereof.

13. The foamed resin-forming composition according to any one of claims 1 to 12, wherein the aromatic polyamine compound (C) is a compound represented by the following formula (IIIa): 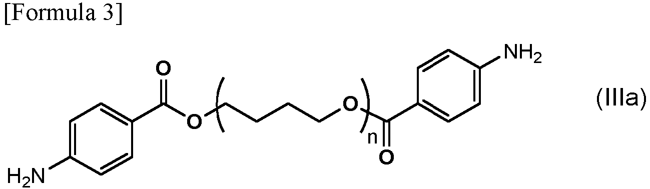 wherein n is preferably 1 to 20.

14. A polyurea-based resin foam obtained by foam molding the foamed resin-forming composition according to any one of claims 1 to 13.

15. The polyurea-based resin foam according to claim 14, comprising a polyurea having a repeating unit represented by the following general formula (I): 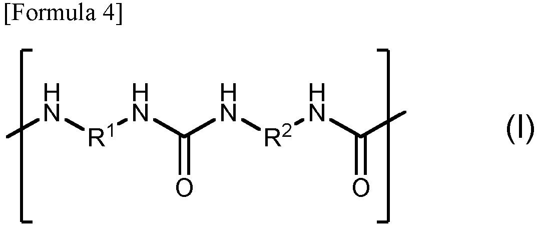 wherein R¹ is a divalent hydrocarbon group having a cyclic structure and optionally having a substituent and a divalent organic group having an aromatic ring structure and optionally having a substituent, R² is a divalent hydrocarbon group optionally having a substituent, and in the divalent organic group having an aromatic ring structure, an aromatic ring is bonded to a nitrogen atom.

16. The polyurea-based resin foam according to claim 14 or 15, wherein an amine value of the aromatic polyamine compound (C) is 50 to 600 mg KOH/g.

17. A method for producing a polyurea-based resin foam, comprising a step of foam molding the foamed resin-forming composition according to any one of claims 1 to 13.

18. The method for producing a polyurea-based resin foam according to claim 17, comprising a step of contacting the cyclic polyamine compound (a1) with a gas containing carbon dioxide to obtain a reaction product (A) and a step of mixing the resulting reaction product (A) with a polyisocyanate compound (B) and an aromatic polyamine compound (C) to obtain a foamed resin-forming composition.

19. The method for producing a polyurea-based resin foam according to claim 17 or 18, wherein an amine value of the aromatic polyamine compound (C) is 50 to 600 mg KOH/g.
